# EUROPEAN PATENT APPLICATION

(11) **EP 4 407 764 A1**
(43) Date of publication of application: **31.07.2024**
(21) Application number: 23745838.5
(22) Date of filing: 05.01.2023
(51) Int. Cl.: H01M 50/202, H01M 50/249, H01M 50/289

(54) **BATTERY TOP COVER ASSEMBLY, BATTERY CELL, BATTERY AND ELECTRIC DEVICE**

(30) Priority: 29.01.2022 CN 202220245205 U
(71) Applicant: Contemporary Amperex Technology Co., Limited, Ningde, Fujian 352100 (CN)
(72) Inventor: JIN, Yikuang, Ningde, Fujian 352100 (CN); XU, Hu, Ningde, Fujian 352100 (CN); ZHUO, Weirong, Ningde, Fujian 352100 (CN); XIE, Mianyu, Ningde, Fujian 352100 (CN); XU, Zhihao, Ningde, Fujian 352100 (CN)
(74) Representative: Laufhütte, Dieter
(86) International application number: PCT/CN2023/070742
(87) International publication number: WO 2023/142953

(57) **Abstract**

This application provides a battery top cover assembly, a battery cell, a battery, and an electric apparatus. The battery top cover assembly includes a cover; a connecting member; and an insulating member connected between the cover and the connecting member. The insulating member has a first outer surface exposed outside the cover and the connecting member; and a first seam is present between the first outer surface and the cover, and a second seam is present between the first outer surface and the connecting member. A first sealing portion is disposed at the first seam and configured to cover the first seam, and/or a second sealing portion is disposed at the second seam and configured to cover the second seam. In the technical solution of this embodiment of this application, as the first sealing portion is disposed at the first seam between the cover and the insulating member and/or the second sealing portion is disposed at the second seam between the insulating member and the connecting member, a liquid such as an electrolyte can be effectively prevented from infiltrating into the battery top cover assembly through seams between parts, alleviating or even avoiding the phenomenon of electrochemical corrosion.

## Description

### CROSS-REFERENCE TO RELATED APPLICATIONS

This application refers to Chinese Patent Application No. 202220245205.6, filed on January 29, 2022 and entitled "BATTERY TOP COVER ASSEMBLY, BATTERY CELL, BATTERY, AND ELECTRIC APPARATUS", which is incorporated herein by reference in its entirety.

### TECHNICAL FIELD

This application relates to the field of battery technologies, and in particular, to a battery top cover assembly, a battery cell, a battery, and an electric apparatus.

### BACKGROUND

Energy conservation and emission reduction are crucial to the sustainable development of the automobile industry. Electric vehicles, with their advantages in energy conservation and emission reduction, have become an important part of sustainable development of the automobile industry. For electric vehicles, battery technology is an important factor in connection with their development.

However, the battery cell in the related art is prone to electrochemical corrosion.

### SUMMARY

This application is intended to resolve at least one of the technical problems in the prior art. In view of this, an objective of this application is to provide a battery top cover assembly, a battery cell, a battery, and an electric apparatus, so as to alleviate the phenomenon of the battery being prone to electrochemical corrosion.

An embodiment of a first aspect of this application provides a battery top cover assembly. The battery top cover assembly includes: a cover; a connecting member; and an insulating member connected between the cover and the connecting member. The insulating member has a first outer surface exposed outside the cover and the connecting member; and a first seam is present between the first outer surface and the cover, and a second seam is present between the first outer surface and the connecting member. A first sealing portion is disposed at the first seam and configured to cover the first seam, and/or a second sealing portion is disposed at the second seam and configured to cover the second seam.

In the technical solution of this embodiment of this application, as the first sealing portion is disposed at the first seam between the cover and the insulating member and/or the second sealing portion is disposed at the second seam between the insulating member and the connecting member, a liquid such as an electrolyte can be effectively prevented from infiltrating into the battery top cover assembly through seams between parts, alleviating or even avoiding the phenomenon of electrochemical corrosion.

In some embodiments, the first sealing portion includes a first adhesive layer applied to the first seam. The first adhesive layer may be formed by applying a binder through a simple and convenient application operation and can also cover the first seam well.

In some embodiments, the second sealing portion includes a second adhesive layer applied to the second seam. The first adhesive layer may be formed by applying a binder through a simple and convenient application operation and can also cover the second seam well.

In some embodiments, the first outer surface includes a first sub-surface and a second sub-surface arranged at a preset included angle, the first seam is present between the first sub-surface and the cover, and the second seam is present between the second sub-surface and the connecting member. A region, where the first sealing portion is provided, may be formed between the first sub-surface and the cover, thus assisting in fixing the first sealing portion to the first seam. A region, where the second sealing portion is provided, may be formed between the second sub-surface and the cover, thus assisting in fixing the second sealing portion to the second seam.

In some embodiments, the second sub-surface is parallel to the cover, and the preset included angle is 90 degrees. The first sub-surface and the top surface of the cover body may roughly form a right-angled region with the first seam as a vertex, thus facilitating arrangement of the first sealing portion, especially, the first adhesive layer. The second sub-surface may be used to bear the second sealing portion thus facilitating arrangement of the second sealing portion, especially, the second adhesive layer.

In some embodiments, the first sealing portion is disposed at the first seam, the second sealing portion is disposed at the second seam, and the first sealing portion and the second sealing portion are connected to each other to form an integrated part. The integrated part may be formed through a single process, simplifying the manufacturing process of the first sealing portion and the second sealing portion.

In some embodiments, the cover is further provided with a blocking portion. The blocking portion surrounds the insulating member, and the blocking portion is configured to block a liquid from flowing to the insulating member from an edge of the cover. The blocking portion is located at the periphery of the insulating member and can block continuous movement of the liquid towards the insulating member, further alleviating infiltration of the liquid into the battery top cover assembly along the first seam and the second seam, thus alleviating or even avoiding the phenomenon of electrochemical corrosion.

In some embodiments, the blocking portion extends along a direction surrounding the insulating member to form an annular structure, thus blocking the liquid such as an electrolyte from infiltrating into the battery top cover assembly at all angles.

In some embodiments, the blocking portion is disposed on atop surface of the cover facing the connecting member. The top surface has a large area and is relatively flat, facilitating arrangement of the blocking portion.

In some embodiments, the blocking portion includes a protrusion protruding from the top surface or a groove recessed on the top surface. When the liquid such as an electrolyte flows to the blocking portion, the groove or protrusion can change the flow direction of the electrolyte and block it from flowing to the insulating member, thus effectively preventing the electrolyte from infiltrating into the battery top cover assembly.

In some embodiments, the battery top cover assembly further includes at least one mounting member. The mounting member runs through the cover, the insulating member, and the connecting member to fixedly connect the cover, the insulating member, and the connecting member, thus fastening the cover, the insulating member, and the connecting member together. This can narrow the first seam and the second seam, thus effectively preventing the liquid from infiltrating into the battery top cover assembly through the first seam and the second seam.

In some embodiments, a top portion of the insulating member back away from the cover is provided with a recessed region, the connecting member is accommodated in the recessed region, and the connecting member exceeds the insulating member along a direction back away from the cover. This facilitates connection of the connecting member to other conductive parts and also facilitates arrangement of the second sealing portion, especially the second adhesive layer.

An embodiment of a second aspect of this application provides a battery cell including a housing and the battery top cover assembly according to the foregoing embodiments, where the battery top cover assembly is connected to the housing. The battery cell provided in this embodiment has good airtightness and can alleviate the problem that the electrolyte or another liquid is likely to infiltrate into the battery top cover assembly, thus alleviating the phenomenon of the battery cell being prone to electrochemical corrosion.

In some embodiments, the connecting member of the battery top cover assembly is configured as a negative electrode of the battery cell, and can effectively prevent the phenomenon of electrochemical corrosion on the negative electrode.

In some embodiments, the connecting member of the battery top cover assembly is configured as a positive electrode of the battery cell, and can effectively prevent the phenomenon of electrochemical corrosion on the positive electrode.

An embodiment of a third aspect of this application provides a battery including the battery cell according to the foregoing embodiments.

An embodiment of a fourth aspect of this application provides an electric apparatus, where the electric apparatus includes the battery in the foregoing embodiment, and the battery is configured to supply electrical energy.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts. In the accompanying drawings, unless otherwise specified, the same reference signs throughout a plurality of accompanying drawings indicate the same or similar components or elements. These accompanying drawings may not necessarily be drawn to scale. It should be understood that these accompanying drawings illustrate only some embodiments disclosed in this application and should not be construed as limitations on the scope of this application.
FIG. 1 is a schematic structural diagram of a vehicle according to some embodiments of this application;
FIG. 2 is a schematic structural diagram of a battery according to some embodiments of this application;
FIG. 3 is a schematic structural diagram of a battery cell according to some embodiments of this application;
FIG. 4 is a schematic structural exploded view of a battery cell according to some embodiments of this application;
FIG. 5 is a locally enlarged view of position A in FIG. 3;
FIG. 6 is a top view of a battery cell according to some embodiments of this application;
FIG. 7 is a schematic cross-sectional view of position B-B in FIG. 6;
FIG. 8 is a locally enlarged view of position D in FIG. 7;
FIG. 9 is a locally enlarged diagram of a battery top cover assembly according to some other embodiments of this application; and
FIG. 10 is a schematic cross-sectional view of position C-C in FIG. 6.

Reference signs are described as follows:
vehicle 1000;
battery 100; controller 200; motor 300;
box 10; first portion 11; second portion 12;
battery cell 20; battery top cover assembly 21; electrode 211; cover 212; connecting member 213; recessed region 2131; insulating member 214; first outer surface 2141; first sub-surface 2141a; second sub-surface 2141b; first seam 2142; second seam 2143; first sealing portion 215; second sealing portion 216; blocking portion 217; mounting member 218; and housing 22.

### DETAILED DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "have", and any other variations thereof in the specification, claims and brief description of drawings of this application are intended to cover non-exclusive inclusions.

In the description of the embodiments of this application, the terms "first", "second", and the like are merely intended to distinguish between different objects, and shall not be understood as any indication or implication of relative importance or any implicit indication of the number, sequence or primary-secondary relationship of the technical features indicated. In the description of this application, "a plurality of' means at least two unless otherwise specifically stated.

In this specification, reference to "embodiment" means that specific features, structures or characteristics described with reference to the embodiment may be incorporated in at least one embodiment of this application. The word "embodiment" appearing in various positions in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal" "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of the description of the embodiments of this application rather than indicating or implying that the means or components mentioned must have specific orientations, or must be constructed or manipulated according to specific orientations, and therefore shall not be construed as any limitations on embodiments of this application.

In the description of the embodiments of this application, unless otherwise specified and defined explicitly, the terms "mounting", "connection", "join", and "fastening" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

Currently, from a perspective of the market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

This applicant has noticed that during a manufacturing process of battery cell, a liquid such as an electrolyte is likely to enter into a top cover assembly, thus causing electrochemical corrosion. Using a cylindrical battery cell as an example, in the related art, the battery cell typically includes a housing and a top cover assembly, and the top cover assembly is provided with an electrolyte injection hole through which an electrolyte can be injected into the housing. Due to the small electrolyte injection hole, the electrolyte may leak outwards during injection. The electrolyte leaking outwards is likely to flow from the electrolyte injection hole to the housing and then flow to the top cover assembly along the housing, and infiltrates into the top cover assembly, causing electrolyte contamination. The electrolyte contamination can cause electronic conductive products, forming a corrosive circuit, which thus is likely to cause a short circuit between a top cover plate in the top cover assembly and electrode terminals and also cause electrochemical corrosion on the electrode terminals and the like.

Furthermore, in addition to the manufacturing process of battery cell, during use of a battery, once electrolyte leakage occurs in a battery cell, the electrolyte is also likely to infiltrate into the top cover assembly of another battery cell, thus causing electrochemical corrosion.

To resolve at least one of the foregoing problems, embodiments of this application provide a battery top cover assembly, a battery cell, a battery, and an electric apparatus. The battery top cover assembly includes a cover; a connecting member; and an insulating member connected between the cover and the connecting member. A first seam is present between the insulating member and the cover, and a second seam is present between the insulating member and the connecting member. A first sealing portion is disposed at the first seam and configured to cover the first seam, and/or a second sealing portion is disposed at the second seam and configured to cover the second seam. This can effectively prevent a liquid such as an electrolyte from infiltrating into the battery top cover assembly through seams between parts, alleviating or even avoiding the phenomenon of electrochemical corrosion. The following will further describe this application with reference to specific embodiments.

The battery cell disclosed in the embodiments of this application may be used without limitation in electric apparatuses such as vehicles, ships, or aircrafts. The battery cell, the battery, and the like disclosed in this application may be used to constitute a power supply system of the electric apparatus. This helps relieve and automatically adjust deterioration in the swelling force of a cell, supplement electrolyte consumption, and improve stability of the performance and service life of the battery.

An embodiment of this application provides an electric apparatus that uses a battery as a power source. The electric apparatus may be but is not limited to a mobile phone, a tablet, a laptop computer, an electric toy, an electric tool, an electric bicycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of this application being a vehicle 1000 is used as an example for description of the following embodiments.

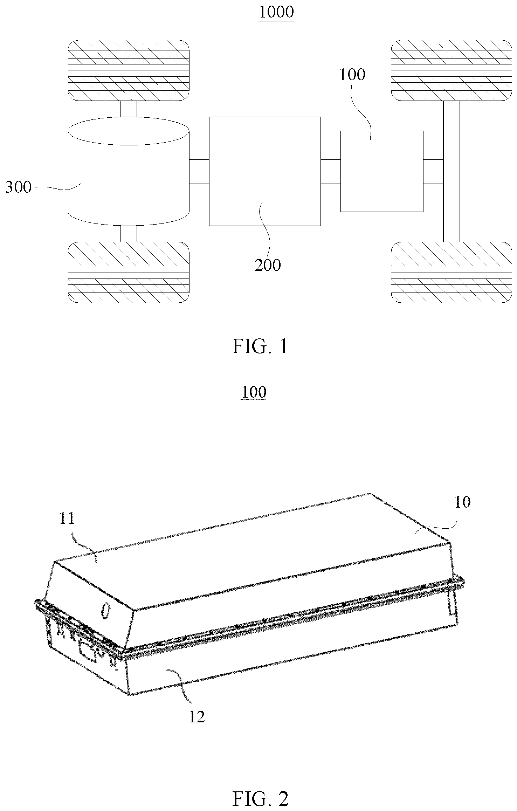

FIG. 1 is a schematic structural diagram of a vehicle 1000 according to some embodiments of this application. Referring to FIG. 1, the vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, where the battery 100 may be disposed at the bottom, front or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

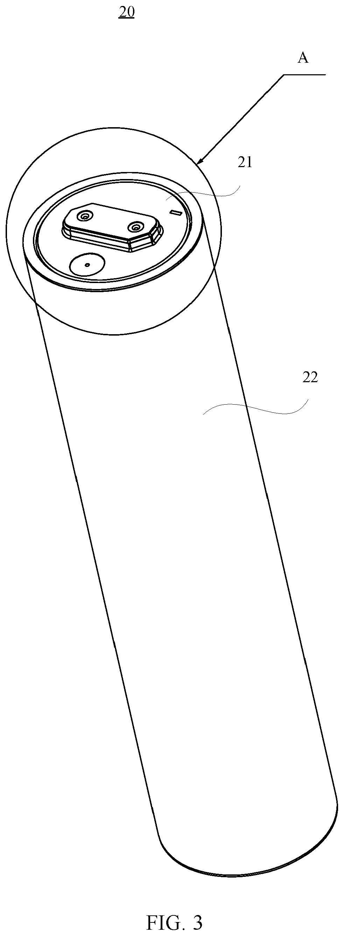

FIG. 2 is a schematic structural diagram of a battery 100 according to some embodiments of this application; and FIG. 3 is a schematic structural diagram of a battery cell according to some embodiments of this application. Referring to FIGs. 2 and 3, the battery 100 includes a box 10 and a battery cell 20, where the battery cell 20 is accommodated in the box 10. The box 10 is configured to provide an accommodating space for the battery cell 20. The box 10 may be a variety of structures. In some embodiments, the box 10 may include a first portion 11 and a second portion 12. The first portion 11 and the second portion 12 fit together so that the first portion 11 and the second portion 12 jointly define a space for accommodating the battery cell 20. The second portion 12 may be a hollow structure with an opening at one side, and the first portion 11 may be a plate-shaped structure, where the first portion 11 covers the opening side of the second portion 12 for the first portion 11 and the second portion 12 to jointly define an accommodating space. Alternatively, the first portion 11 and the second portion 12 may both be hollow structures with an opening at one side, where the opening side of the first portion 11 fits with the opening side of the second portion 12. Certainly, the box 10 formed by the first portion 11 and the second portion 12 may have a variety of shapes, for example, cylinder or cuboid.

In the battery 100, the battery cells 20 are present in plurality, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel or series-parallel, and then an entirety of the plurality of battery cells 20 is accommodated in the box 10; or certainly, the battery 100 may be formed by a plurality of battery cells 20 being connected in series, parallel or series-parallel first to form a battery module and then a plurality of battery modules being connected in series, parallel or series-parallel to form an entirety which is accommodated in the box 10. The battery 100 may further include other structures. For example, the battery 100 may further include a busbar configured to implement electrical connection between the plurality of battery cells 20.

Each battery cell 20 may be a secondary battery or a primary battery, and may be a lithium-sulfur battery, a sodium-ion battery, or a magnesium-ion battery, without being limited thereto. The battery cell 20 may be cylindrical, straight, cuboid, or of other shapes.

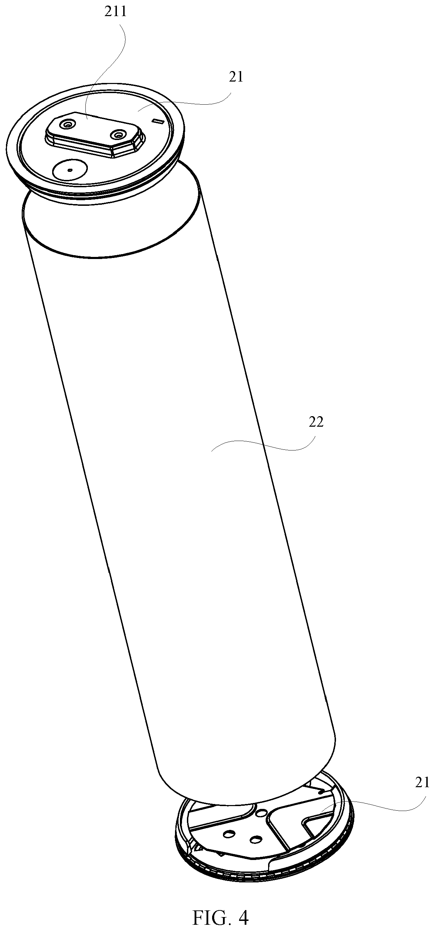

FIG. 4 is a schematic structural exploded view of a battery cell according to some embodiments of this application. Referring to FIGs. 3 and 4, the battery cell 20 refers to a smallest unit constituting a battery. The battery cell 20 includes a battery top cover assembly 21, a housing 22, a cell assembly, and other functional components.

The battery top cover assembly 21 refers to a component that covers an opening of the housing 22 to isolate an internal environment of the battery cell 20 from an external environment thereof. A shape of the battery top cover assembly 21 is not limited and may be adapted to a shape of the housing 22. In some embodiments, the battery top cover assembly 21 may have certain hardness and strength, so that the battery top cover assembly 21 is less likely to deform when subjected to extrusion and collision, enabling the battery cell 20 to have higher structural strength and improved safety performance. The battery top cover assembly 21 may be provided with functional components such as an electrode 211. The electrode 211 may be configured to be electrically connected to the cell assembly for outputting or inputting electrical energy of the battery cell 20. In some embodiments, the battery top cover assembly 21 may alternatively be provided with a pressure relief mechanism for releasing internal pressure when the internal pressure or a temperature of the battery cell 20 reaches a threshold. The battery top cover assembly 21 may be made at least one of various materials, such as copper, iron, aluminum, stainless steel, aluminum alloy, and plastic, which are not particularly limited in this embodiment of this application.

The housing 22 is an assembly configured to cooperate with the battery top cover assembly 21 to form an internal environment of the battery cell 20, where the formed internal environment can be used for accommodating the electrode assembly, an electrolyte, and other components. The housing 22 and the battery top cover assembly 21 may be independent components, an opening may be formed in the housing 22, and the battery top cover assembly 21 covers the opening to form the internal environment of the battery cell 20. The battery top cover assembly 21 and the housing 22 are not limited and may also be integrated. Specifically, the battery top cover assembly 21 and the housing 22 may form a shared connection surface before other components are disposed in the housing and then, the housing 22 is covered with the battery top cover assembly 21 when inside of the housing 22 needs to be enclosed. The housing 22 may be of various shapes and sizes, such as a cuboid shape, a cylindrical shape, and a hexagonal prism shape. Specifically, the shape of the housing 22 may be determined based on a specific shape and size of a cell assembly. The housing 22 may be made of various materials, such as copper, iron, aluminum, stainless steel, aluminum alloy, and plastic, which are not particularly limited in the embodiments of this application.

The cell assembly is a component in which electrochemical reactions take place in the battery cell 20. There may be one or more cell assemblies in the housing 22. The cell assembly is mainly formed by winding or stacking a positive electrode plate and a negative electrode plate, and a separator is generally disposed between the positive electrode plate and the negative electrode plate. Parts of the positive electrode plate and the negative electrode plate with active substances constitute a body portion of the cell assembly, while parts of the positive electrode plate and the negative electrode plate without active substances separately constitute a tab. A positive tab and a negative tab may both be located at one end of the body portion or be located at two ends of the body portion respectively. During charge and discharge of the battery, a positive electrode active substance and a negative electrode active substance react with an electrolyte, and the tabs are connected to the electrode 211 to form a current loop.

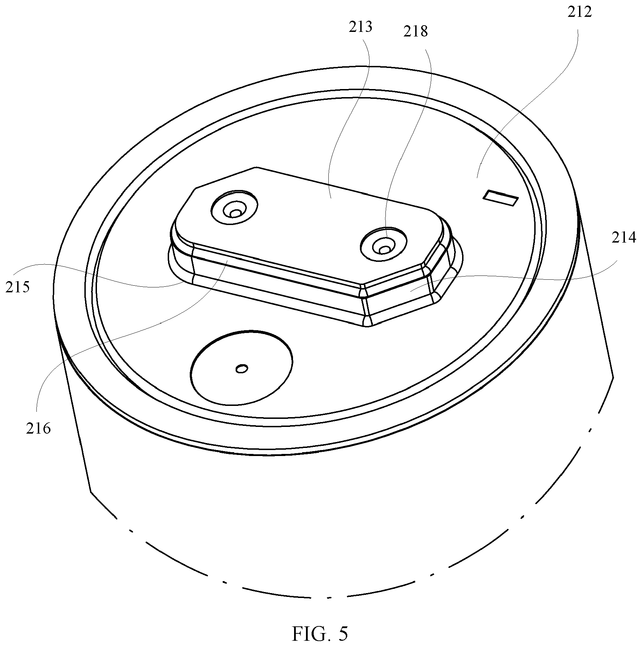

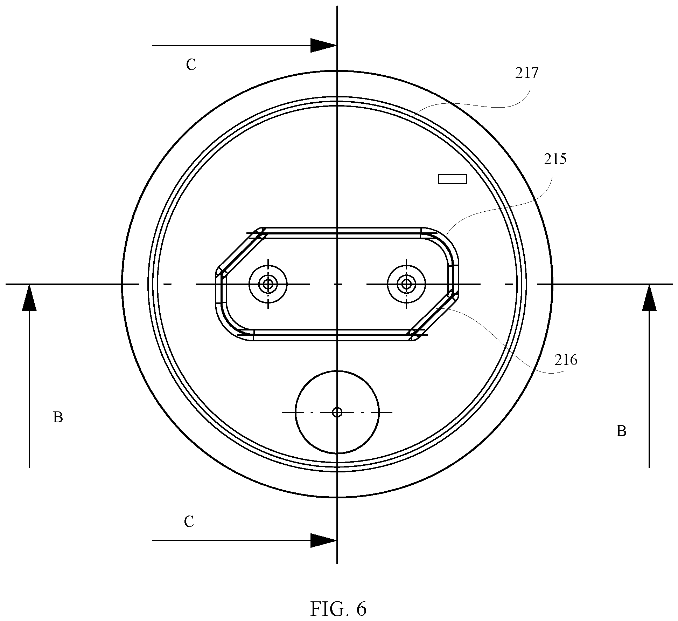

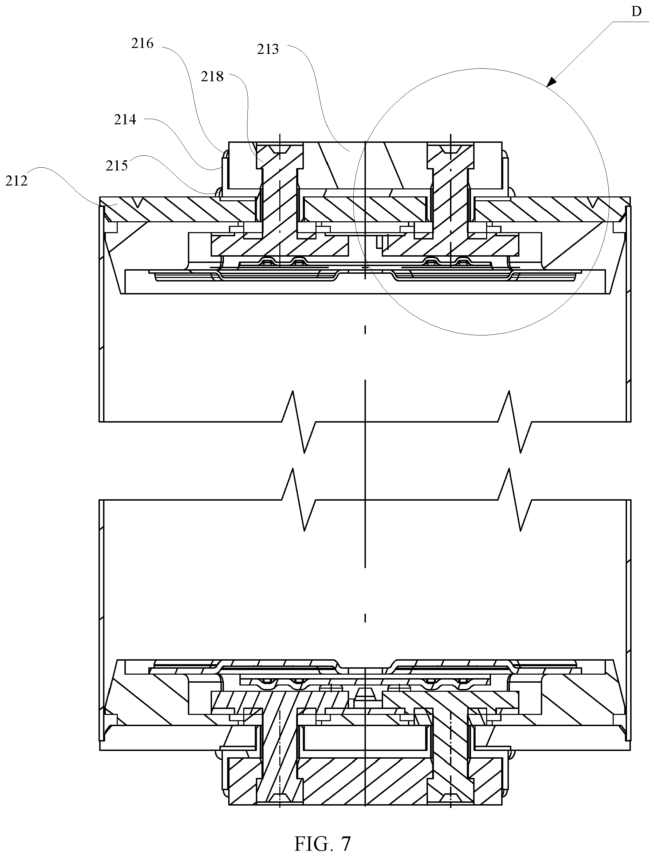

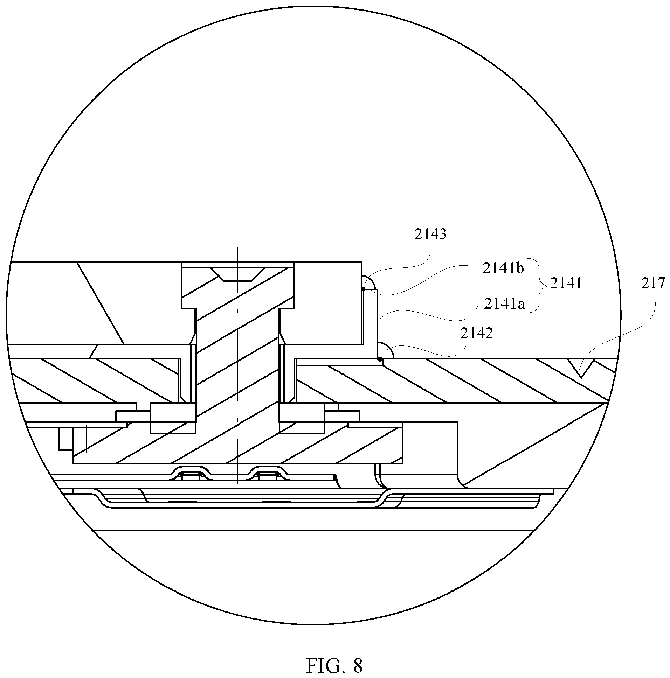

FIG. 5 is a locally enlarged view of position A in FIG. 3; FIG. 6 is a top view of a battery cell according to some embodiments of this application; FIG. 7 is a schematic cross-sectional view of position B-B in FIG. 6; and FIG. 8 is a locally enlarged view of position D in FIG. 7.

Referring to FIGs. 5 to 8, an embodiment provides a battery top cover assembly 21 including: a cover 212, a connecting member 213, and an insulating member 214 connected between the cover 212 and the connecting member 213. The insulating member 214 has a first outer surface 2141 exposed outside the cover 212 and the connecting member 213; and a first seam 2142 is present between the first outer surface 2141 and the cover 212, and a second seam 2143 is present between the first outer surface 2141 and the connecting member 213. A first sealing portion 215 is disposed at the first seam 2142 and configured to cover the first seam 2142, and/or a second sealing portion 216 is disposed at the second seam 2143 and configured to cover the second seam 2143.

The cover 212 may be made of high-strength materials such as copper, iron, aluminum, stainless steel, aluminum alloy, and other metals, so as to maintain the shape of the battery cell 20. In some embodiments, the cover 212 may roughly be of a plate-shaped or block-shaped structure.

The connecting member 213 may be made of metals with good conductivity, such as copper or aluminum. In some embodiments, the connecting member 213 can be used to form the electrode 211. In some embodiments, the connecting member 213 may roughly be block-shaped.

The insulating member 214 is disposed between the connecting member 213 and the cover 212, and the insulating member 214 may be made of an insulating material such as plastic or rubber. The insulating member 214 can be used to isolate the connecting member 213 from the cover 212, so as to provide electrical isolation function, reducing the short-circuit risk caused by connection therebetween.

In some embodiments, when the connecting member 213 is used to form the electrode 211, one or two connecting members 213 may be disposed on one cover 212. If only one connecting member 213 is provided, the connecting member 213 can be used to form a positive electrode or a negative electrode. When two connecting members 213 are provided, an insulating member 214 may be disposed between each of the two connecting members 213 and the cover 212, and the two connecting members 213 are respectively used to form a positive electrode and a negative electrode.

It can be understood that the insulating member 214 can isolate the connecting member 213 from the cover 212. A partial surface of the insulating member 214 is in contact with and overlap with the connecting member 213 and the cover 212, and a partial surface is exposed outside the connecting member 213 and the cover 212. This partial surface may be the first outer surface 2141. It can be understood that the first outer surface 2141 may be exposed outside the battery cell 20, meaning that the surface can be observed from the outside of the battery cell 20.

A seam between the first outer surface 2141 and the cover 212 may be the first seam 2142, meaning that the first seam 2142 may be an edge of the first outer surface 2141 close to or in contact with the cover 212. The first seam 2142 may be roughly a linear structure with the head and tail connected, where the linear structure is not limited to being circular, square, and elliptical, which can be arranged specifically based on actual requirements.

A seam between the first outer surface 2141 and the connecting member 213 may be the second seam 2143, meaning that the second seam 2143 may be an edge of the first outer surface 2141 close to or in contact with the connecting member 213. The second seam 2143 may be roughly a linear structure with the head and tail connected, where the linear structure is not limited to being circular, square, and elliptical, and the first seam 2142 and the second seam 2143 may be in the same shape or different shapes. The specific shape may be arranged based on actual requirements.

In this embodiment, the first sealing portion 215 may be disposed at the first seam 2142 or the second sealing portion 216 may be disposed at the second seam 2142. Alternatively, the first sealing portion 215 and the second sealing portion 216 may be respectively disposed at the first seam 2142 and the second seam 2143 at the same time.

There may be various types of first sealing portions 215. For example, the first sealing portion 215 may be of a sealing ring structure made of rubber, plastic, or the like. It can be understood that the first sealing portion 215 may cover the first seam 2142. For example, the first sealing portion 215 may exactly fill the first seam 2142 to seal the first seam 2142, or the first sealing portion 215 may be connected between the cover 212 and the insulating member 214 to completely cover the first seam 2142. The first sealing portion 215 may be configured to alleviate the problem that the liquid such as an electrolyte is likely to enter into the battery top cover assembly 21 through the seam between the cover 212 and the insulating member 214.

There may be various types of second sealing portions 216. For example, the second sealing portion 216 may be of a sealing ring structure made of rubber, plastic, or the like. It can be understood that the second sealing portion 216 may cover the second seam 2143. For example, the second sealing portion 216 may exactly fill the second seam 2143 to seal the second seam 2143, or the second sealing portion 216 may be connected between the connecting member 213 and the insulating member 214 to completely cover the second seam 2143. The second sealing portion 216 may be configured to alleviate the problem that the liquid such as an electrolyte is likely to enter into the battery top cover assembly 21 through the seam between the connecting member 213 and the insulating member 214.

With a plane perpendicular to the cover 212 as a longitudinal section, the cross-sectional shape of the first sealing portion 215 or the second sealing portion 216 may be circular, arc-shaped, rectangular, triangular, or the like.

It can be understood that in an example where electrodes 211 are respectively located at two ends of the battery cell 20, during manufacturing process of the battery cell 20, when the electrolyte is injected into the battery cell 20, the overflowing electrolyte can flow to the battery top cover assembly 21 at the bottom of the battery cell 20 along the housing 22, and the first sealing portion 215 and/or the second sealing portion 216 can block the electrolyte from flowing into the battery top cover assembly 21 through seams between parts of the battery top cover assembly 21. This can effectively prevent short-circuit connection of the cover 212 and the connecting member 213 due to corrosion of the electrolyte and even alleviate the phenomenon of electrochemical corrosion on the electrodes 211.

Certainly, the first sealing portion 215 and the second sealing portion 216, during use of the battery, can further avoid the leaking electrolyte or other liquids infiltrating into the battery top cover assembly 21.

According to some embodiments of this application, the first sealing portion 215 may include a first adhesive layer applied to the first seam 2142.

The first adhesive layer may be made of a binder such as an epoxy UV adhesive or glass adhesive (silicone adhesive and polyurethane adhesive (PU)). The binder is cured to form the first adhesive layer.

During application, the binder may be applied along the first seam 2142 to exactly fill the first seam 2142. Alternatively, additional binder may be applied along the first seam 2142 such that the binder can overflow and be stacked near the first seam 2142, thus achieving a better covering effect.

The first adhesive layer may be formed by applying a binder through a simple and convenient application operation and can also cover the first seam 2142 well.

According to some embodiments of this application, the second sealing portion 216 includes a second adhesive layer applied to the second seam 2143.

The second adhesive layer may be made of a binder such as an epoxy UV adhesive or glass adhesive (silicone adhesive and polyurethane adhesive (PU)). The binder is cured to form the second adhesive layer.

During application, the binder may be applied along the second seam 2143 to exactly fill the second seam 2143. Alternatively, additional binder may be applied along the second seam 2143 such that the binder can overflow and be stacked near the second seam 2143, thus achieving a better covering effect.

The second adhesive layer may be formed by applying a binder through a simple and convenient application operation and can also cover the second seam 2143 well.

Referring to FIG. 8, in some embodiments, the first outer surface 2141 includes a first sub-surface 2141a and a second sub-surface 2141b arranged at a preset included angle, the first seam 2142 is present between the first sub-surface 2141a and the cover 212, and a second seam 2143 is present between the second sub-surface 2141b and the connecting member 213.

The first sub-surface 2141a may be a plane or a curved surface, and the second sub-surface 2141b may be a plane or a curved surface. When both the two are planes, the preset included angle may be an included angle between the first sub-surface 2141a and the second sub-surface 2141b. When both the two are curved surfaces, the preset included angle may be an included angle between tangents of two curved surfaces close to a connection point.

The preset included angle may be set based on actual situations, for example, being greater than 0 degree and less than 180 degrees, which can be specifically set based on actual situations.

In some embodiments, the first sub-surface 2141a is directly connected to the second sub-surface 2141b. In some other embodiments, the two may alternatively be directly connected via another sub-surface.

The first sub-surface 2141a and the cover 212 may enclose a region where the first sealing portion 215 is disposed, so as to assist in fixing the first sealing portion 215 to the first seam 2142. The second sub-surface 2141b and the connecting member 213 may enclose a region where the second sealing portion 216 is disposed, so as to assist in fixing the second sealing portion 216 to the second seam 2143.

In some embodiments, the second sub-surface 2141b is parallel to the cover 212, and the preset included angle is 90 degrees.

The cover 212 may roughly be of a plate-shaped structure, and a top surface of the cover 212 back way from the housing 22 may roughly extend along the plane. The second sub-surface 2141b may be parallel to the top surface of the cover 212, and the first sub-surface 2141a may be perpendicular to the second sub-surface 2141b.

The first sub-surface 2141a and the top surface 212 of the cover body 212 may roughly form a right-angled region with the first seam 2142 as a vertex, thus facilitating arrangement of the first sealing portion 215. This especially alleviates the flow of the binder, facilitating arrangement of the first adhesive layer.

The second sub-surface 2141b may be used to bear the second sealing portion 216, thus facilitating arrangement of the second sealing portion 216. This especially alleviates the flow of the binder, facilitating arrangement of the second adhesive layer.

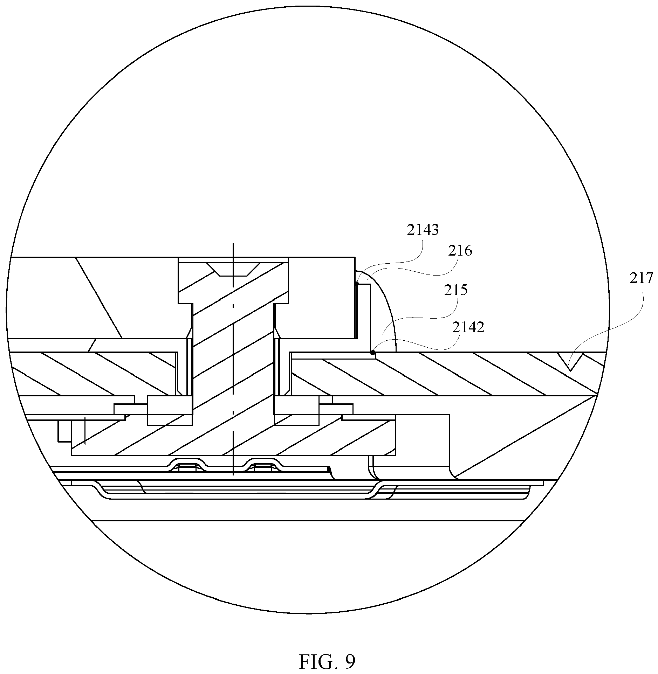

FIG. 9 is a locally enlarged diagram of a battery top cover assembly according to some other embodiments of this application. Referring to FIG. 9, in some other embodiments, the first sealing portion 215 is disposed at the first seam 2142, the second sealing portion 216 is disposed at the second seam 2143, and the first sealing portion 215 and the second sealing portion 216 are connected to each other to form an integrated part.

The integrated part may be of a whole structure. When both the first sealing portion 215 and the second sealing portion 216 are disposed, the first sealing portion 215 and the second sealing portion 216 may be interconnected or integrated into a whole structure.

The integrated part may be formed through a single process, simplifying the manufacturing process of the first sealing portion 215 and the second sealing portion 216.

On the basis of the foregoing embodiments, still referring to FIGs. 6 and 8, the cover 212 is further provided with a blocking portion 217. The blocking portion 217 surrounds the insulating member 214 and the blocking portion 217 is configured to block the liquid from flowing to the insulating member 214 from an edge of the cover 212.

The blocking portion 217 may surround the insulating member 214. It can be understood that the orthographic projection of the insulating member 214 on the cover 212 may be within the orthographic projection of the blocking portion 217 on the cover 212. The shape of the blocking portion 217 surrounding the insulating member 214 may be circular, square, or other polygons, which may be arranged based on actual situations.

When the liquid such as the electrolyte flows to the battery top cover assembly 21 at the bottom of the battery cell 20 along the housing 22, the liquid starts to move towards the insulating member 214 in the middle of the cover 212 from an edge of the cover 212 connected to the housing 22. The blocking portion 217 is located at the periphery of the insulating member 214 and can block continuous movement of the liquid towards the insulating member 214, further alleviating infiltration of the liquid into the battery top cover assembly 21 along the first seam 2142 and the second seam 2143, thus alleviating or even avoiding the phenomenon of electrochemical corrosion.

In some embodiments, the blocking portion 217 extends along a direction surrounding the insulating member 214 to form an annular structure.

The annular structure may be understood as a ring structure with the head and tail connected, thus blocking the liquid such as an electrolyte from infiltrating into the battery top cover assembly 21 at all angles.

In some embodiments, the blocking portion 217 may be disposed on the top surface of the cover 212 facing the connecting member 213.

The surface of the cover 212 back away from the housing 22 may be a top surface. The top surface has a large area and is relatively flat, facilitating arrangement of the blocking portion 217.

In some embodiments, the blocking portion 217 includes a protrusion protruding from the top surface or a groove recessed on the top surface.

Referring to FIG. 8, the blocking member 217 may be a groove provided on the top surface. The cross section of the groove may be in the shape of a triangle, arc, rectangle, circle, sawtooth, rectangle, or the like. The groove may be formed through punching, featuring simple structure and easy implementation.

Certainly, the blocking member 217 may be a protrusion protruding from the top surface. The cross section of the protrusion may be in the shape of a triangle, arc, rectangle, circle, sawtooth, rectangle, or the like.

When the liquid such as an electrolyte flows to the blocking portion 217, the groove or protrusion can change the flow direction of the electrolyte, for example, blocking the electrolyte from flowing to the insulating member 214 when it drops below the battery top cover assembly 21, thus effectively preventing the electrolyte from infiltrating into the battery top cover assembly 21.

In some embodiments, the battery top cover assembly 21 further includes at least one mounting member 218. The mounting member 218 runs through the cover 212, the insulating member 214, and the connecting member 213 to fixedly connect the cover 212, the insulating member 214, and the connecting member 213.

The mounting member 218 may be a fastener such as a rivet, which can be connected to the cover 212, the insulating member 214, and the connecting member 213.

Certainly, the mounting member 218 may alternatively be made of a conductive metal material. The top surface of the mounting member 218 may be flush with the surface of the connecting member 213, and the two members may jointly form electrodes 211.

It can be understood that the blocking portion 217 may be further used to block the electrolyte from infiltrating into the battery top cover assembly 21 through the seam between the mounting member 218 and the connecting block 213, further alleviating or avoiding the phenomenon of electrochemical corrosion on the electrode 211.

The cover 212, the insulating member 214, and the connecting member 213 are tightly fastened together via the mounting member 218, narrowing the first seam 2142 and the second seam 2143. This effectively prevents the liquid from infiltrating into the battery top cover assembly 21 through the first seam 2142 and the second seam 2143.

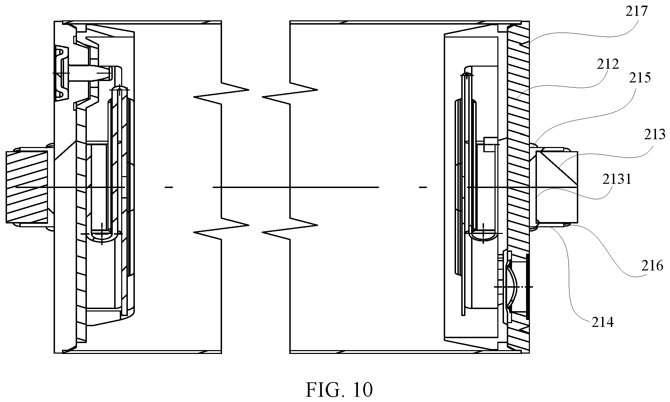

FIG. 10 is a schematic cross-sectional view of position C-C in FIG. 6. Referring to FIG. 10, in some embodiments, a top portion of the insulating member 214 back away from the cover 212 is provided with a recessed region 2131, the connecting member 213 is accommodated in the recessed region 2131, and the connecting member 213 exceeds the insulating member 214 along a direction back away from the cover 212.

The recessed region 2131 may be in many shapes. For example, with a plane parallel to the cover 212 as a cross section, the cross section may be circular or square. The shape of the connecting member 213 may adapt to the recessed region 2131, narrowing the second seam 2143, thus effectively preventing the electrolyte from flowing into the battery top cover assembly 21 through the second seam 2143.

The connecting member 213 exceeds the insulating member 214, which facilitates connection between the connecting member 213 and other conductive parts and also facilitates arrangement of the second sealing portion 216, especially the second adhesive layer. When the second adhesive layer is disposed at the second seam 2143, the binder forming the second adhesive layer can be maintained on the connecting member 213 until the binder is cured, thus allowing the second sealing portion 216 to better cover the second seam 2143.

An embodiment of this application provides a battery cell 20 including a battery top cover assembly 21 and a housing 22, where the battery top cover assembly 21 is connected to the housing 22.

The housing 22 may be of a hollow structure with a cavity inside and may be provided with an opening, and the battery top cover assembly 21 may be disposed at the opening. The battery top cover assembly 21 may be provided with two connecting members 213, and the two connecting members 213 may be respectively configured as a positive electrode and a negative electrode. Alternatively, the housing 22 may be provided with two opposite openings, each opening may be provided with one battery top cover assembly 21, each battery top cover assembly 21 may be provided with one connecting member 213, and the connecting member 213 may be configured as a positive electrode or a negative electrode. The battery top cover assembly 21 has the same structure and function as the foregoing embodiments with specific reference to the foregoing embodiments.

The battery cell 20 provided in this embodiment has good airtightness and can alleviate the problem that the electrolyte or another liquid is likely to infiltrate into the battery top cover assembly 21, thus alleviating the phenomenon of the battery cell 20 being prone to electrochemical corrosion.

In some embodiments, the connecting member 213 of the battery top cover assembly 21 is configured as a negative electrode of the battery cell 20.

The negative electrode is a terminal with a low potential in the battery cell 20. The connecting member 213 may be configured alone as a negative electrode or may be configured as the negative electrode jointly with another part such as the mounting member 218.

The connecting member 213 of the battery top cover assembly 21 is configured as a negative electrode and can effectively prevent the phenomenon of electrochemical corrosion on the negative electrode.

In some embodiments, the connecting member 213 of the battery top cover assembly 21 is configured as a positive electrode of the battery cell 20.

The positive electrode is a terminal with a low potential in the battery cell 20. The connecting member 212 may be configured alone as a positive electrode or configured as the positive electrode jointly with another part such as the mounting member 218.

Applying the connecting member 213 of the battery top cover assembly 21 to the positive electrode can effectively prevent the phenomenon of electrochemical corrosion on the positive electrode.

According to some embodiments of this application, an embodiment of this application further provides a battery 100 including the battery cell 20 described in any one of the foregoing solutions.

According to some embodiments of this application, an embodiment of this application further provides an electric apparatus including the battery 100 described in any one of the foregoing solutions, where the battery 100 is configured to provide electrical energy to the electric apparatus.

The electric apparatus may be any one of the foregoing devices or systems using a battery.

In a specific embodiment, the battery top cover assembly 21 may include a cover 212, a connecting member 213, and an insulating member 214 connected between the cover 212 and the connecting member 213. The insulating member 214 has a first outer surface 2141 exposed outside the cover 212 and the connecting member 213; and a first seam 2142 is present between the first outer surface 2141 and the cover 212, and a second seam 2143 is present between the first outer surface 2141 and the connecting member 213. A first adhesive layer is formed outside the first seam 2142 by applying an adhesive, and a second adhesive layer is disposed outside the second seam 2143 by applying an adhesive. In addition, a blocking portion 217 surrounding the insulating member 214 is further disposed at the periphery of the insulating member 214, and the blocking portion 217 may be arranged as a groove structure on the cover 212, thus blocking a liquid such as an electrolyte from flowing to the internal insulating member 214 from outside of the blocking portion 217.

In conclusion, it should be noted that the above embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. They should all be covered in the scope of the claims and specification of this application. In particular, as long as there is no structural conflict, the various technical features mentioned in the embodiments can be combined in any manner. This application is not limited to the specific embodiments disclosed in this specification but includes all technical solutions falling in the scope of the claims.

## Claims

1. A battery top cover assembly, comprising:
a cover;
a connecting member; and
an insulating member connected between the cover and the connecting member, wherein the insulating member has a first outer surface exposed outside the cover and the connecting member; and a first seam is present between the first outer surface and the cover, and a second seam is present between the first outer surface and the connecting member; wherein
a first sealing portion is disposed at the first seam and configured to cover the first seam, and/or a second sealing portion is disposed at the second seam and configured to cover the second seam.

2. The battery top cover assembly according to claim 1, wherein the first sealing portion comprises a first adhesive layer applied to the first seam.

3. The battery top cover assembly according to claim 1, wherein the second sealing portion comprises a second adhesive layer applied to the second seam.

4. The battery top cover assembly according to claim 1, wherein the first outer surface comprises a first sub-surface and a second sub-surface arranged at a preset included angle, the first seam is present between the first sub-surface and the cover, and the second seam is present between the second sub-surface and the connecting member.

5. The battery top cover assembly according to claim 4, wherein
the second sub-surface is parallel to the cover, and the preset included angle is 90 degrees.

6. The battery top cover assembly according to claim 1, wherein the first sealing portion is disposed at the first seam, the second sealing portion is disposed at the second seam, and the first sealing portion and the second sealing portion are connected to each other to form an integrated part.

7. The battery top cover assembly according to any one of claims 1 to 6, wherein
the cover is further provided with a blocking portion, wherein the blocking portion surrounds the insulating member, and the blocking portion is configured to block a liquid from flowing to the insulating member from an edge of the cover.

8. The battery top cover assembly according to claim 7, wherein the blocking portion extends along a direction surrounding the insulating member to form an annular structure.

9. The battery top cover assembly according to claim 7 or 8, wherein the blocking portion is disposed on a top surface of the cover facing the connecting member.

10. The battery top cover assembly according to claim 9, wherein the blocking portion comprises a protrusion protruding from the top surface or a groove recessed on the top surface.

11. The battery top cover assembly according to any one of claims 1 to 10, further comprising at least one mounting member, wherein
the mounting member runs through the cover, the insulating member, and the connecting member to fixedly connect the cover, the insulating member, and the connecting member.

12. The battery top cover assembly according to any one of claims 1 to 11, wherein a top portion of the insulating member back away from the cover is provided with a recessed region, the connecting member is accommodated in the recessed region, and the connecting member exceeds the insulating member along a direction back away from the cover.

13. A battery cell, comprising a housing and the battery top cover assembly according to any one of claims 1 to 12, wherein the battery top cover assembly is connected to the housing.

14. The battery cell according to claim 13, wherein the connecting member of the battery top cover assembly is configured as a negative electrode of the battery cell.

15. The battery cell according to claim 13, wherein the connecting member of the battery top cover assembly is configured as a positive electrode of the battery cell.

16. A battery, comprising the battery cell according to any one of claims 13 to 15.

17. An electric apparatus, wherein the electric apparatus comprises the battery according to claim 16, and the battery is configured to supply electrical energy.
